# EUROPÄISCHE PATENTSCHRIFT

(11) **EP 3 600 730 B1**
(45) Veröffentlichungstag und Bekanntmachung des Hinweises auf die Patenterteilung: **20.03.2024**
(21) Anmeldenummer: 18724868.7
(22) Anmeldetag: 15.05.2018
(51) Int. Cl.: B22F 10/28, B22F 12/20, B22F 12/45, B29C 64/153, B22F 10/32

(54) **VORRICHTUNG, VERFAHREN UND SYSTEM ZUR ADDITIVEN HERSTELLUNG VON WERKSTÜCKEN**
DEVICE, METHOD AND SYSTEM FOR THE ADDITIVE MANUFACTURE OF WORKPIECES
DISPOSITIF, PROCÉDÉ ET SYSTÈME DE FABRICATION DE PIÈCES PAR IMPRESSION 3D

(30) Priorität: 16.05.2017 DE 102017110649
(43) Veröffentlichungstag der Anmeldung: 05.02.2020
(73) Patentinhaber: Ald Vacuum Technologies GmbH, 63457 Hanau (DE)
(72) Erfinder: NIEBLING, Arno, 63589 Linsengericht (DE); PROTZMANN, Michael, 63607 W chtersbach (DE); HOLZ, Prof. Dr. Markus, 63486 Bruchk bel (DE); FRANZ, Henrik, 63579 Freigericht-Horbach (DE)
(74) Vertreter: Fuchs Patentanwälte Partnerschaft mbB
(86) Internationale Anmeldenummer: PCT/EP2018/062526
(87) Internationale Veröffentlichungsnummer: WO 2018/210813

(56) Entgegenhaltungen:
- EP-A2- 1 704 989
- DE-A1-102009 015 130
- DE-A1-102012 009 071
- DE-U1-202013 009 787
- US-A1- 2005 263 932
- US-A1- 2007 026 145

## Beschreibung

Die vorliegende Erfindung betrifft eine Vorrichtung, ein Herstellungssystem und ein Verfahren zur additiven Herstellung von Werkstücken. Nach dem Verfahren herstellbare Werkstücke sind beispielsweise Turbinenschaufeln, es sind aber auch beliebige andere Geometrien herstellbar.

Vorrichtungen und Verfahren zur additiven Herstellung von Werkstücken sind aus dem Stand der Technik bekannt. Man spricht auch von "generativen Herstellungsverfahren" oder "3D-Druck". Bei diesen Verfahren wird ein Rohmaterial, meist in Pulverform, in Form einer Schicht auf eine Arbeitsfläche aufgetragen, um dort abschnittsweise geschmolzen oder gesintert zu werden. Auf die Schicht wird eine weitere Schicht aufgetragen und so verfahren wie mit der ersten Schicht. Dabei werden die zu schmelzenden bzw. zu sinternden Abschnitte so gewählt, dass schichtweise das dreidimensionale Werkstück aufgebaut wird.

Aus der DE 20 2013 009 787 U1 ist beispielsweise eine Anlage für ein additives Herstellungsverfahren bekannt, bei der Wechselbehälter als Formenkammern verwendet werden. Die Formenkammern sind dabei im gegen die Umgebungsatmosphäre abgedichteten Zustand aus einer Betriebsposition unter einer Prozesskammer in eine abseits gelegene Wechselposition überführbar. Die Prozesskammer bleibt dabei unverschlossen. Ein Abnehmen der Bestrahlungseinrichtung ist nicht vorgesehen.

Ferner betrifft die EP 1 704 989 A2 ein additives Herstellungsverfahren in einer Lasersinteranlage, bei dem ebenfalls Wechselbehälter als Formenkammern verwendet werden. Diese werden über "Ausrichtungsoberflächen" beim Einsetzen unter die Prozesskammer so ausgerichtet, dass die Baufläche immer positionsgenau in der Prozesskammer zu liegen kommt. Die Prozesskammer bleibt auch hier unverschlossen beim Wechsel. Ein Abnehmen der Bestrahlungseinrichtung ist ebenfalls nicht vorgesehen.

Die Verfahren und Vorrichtungen aus dem Stand der Technik weisen allerdings eine Reihe von Nachteilen auf. Beispielsweise sind viele Verfahren nicht wirtschaftlich. Dazu trägt bei, dass besonders bei Verwendung von Elektronenstrahlen zum Schmelzen bzw. Sintern ein Vakuum erforderlich ist. Nach Beendigung eines Herstellungsvorgangs muss das Werkstück aus der Prozesskammer entnommen werden, was den Verlust des Vakuums zur Folge hat. Die Wiederherstellung des Vakuums nimmt wiederum Zeit in Anspruch, während der der Herstellungsprozess eines weiteren Werkstücks noch nicht beginnen kann.

Auch die Säuberung der Prozesskammer und deren Herrichtung für ein Herstellungsverfahren nimmt Zeit in Anspruch. Während dieser Zeit kann das Herstellungsverfahren selbstverständlich nicht durchgeführt werden.

Die hergestellten Werkstücke sind unmittelbar nach der Herstellung sehr heiß. Viele Werkstoffe, insbesondere Metalle, sind in heißem Zustand reaktiv und dürfen nicht mit Luftsauerstoff in Berührung kommen. Daher müssen diese Werkstoffe vor der Entnahme aus dem evakuierten Bereich bis auf eine bestimmte Höchsttemperatur abkühlen, bevor sie entnommen werden können. Während dieser Zeit kann der Herstellungsprozess eines weiteren Werkstücks noch nicht beginnen. Dies ist besonders relevant, da das für den Betrieb von Elektronenstrahlkanonen erforderliche Vakuum die Wärmeleitung durch Konvektion verhindert, sodass die Abkühlung erhebliche Zeit in Anspruch nimmt. Die Abkühlzeiten sind in vielen Verfahren des Standes der Technik auch deshalb sehr lang, weil das um ein hergestelltes Werkstück angeordnete Pulver die Wärme verhältnismäßig schlecht leitet. So dauert die Abkühlung nach der Herstellung meist mehrere Tage.

Für die additive Herstellung geeignete Strahlungsquellen erzeugen energiereiche Strahlung, zum Beispiel Laser- oder Elektronenstrahlung, die in den meisten Verfahren über die aufgetragenen Schichten gescannt wird. Dabei ist die Geschwindigkeit des Schmelzen oder Sinterns nicht nur von der Dauer abhängig, die erforderlich ist, um das Rohmaterial auf die erforderliche Temperatur zu bringen, sondern auch von der Scangeschwindigkeit, mit der der Strahl über das Rohmaterial gezogen werden kann. Hinzu kommt, dass Werkstücke, die eine gewisse Größe überschreiten, einen entsprechend großen Querschnitt aufweisen können, so dass die Fokussierung eines energiereichen Strahls Schwierigkeiten bereiten kann.

Darüber hinaus ist der Materialeinsatz für additive Herstellungsverfahren teilweise immens, da die für eine Schicht benötigte Auftragsmenge nicht von der Größe der Querschnittsfläche des herzustellenden Werkstückes, sondern von der Größe der Arbeitsfläche abhängt, auf die das Rohmaterial aufgebracht wird. Einmal eingesetztes Rohmaterial muss, auch wenn es nicht geschmolzen bzw. gesintert wurde, aufbereitet werden, bevor es wieder verwendet werden kann. Besonders bei teuren Werkstoffen wie Metallen oder Metalllegierungen ist es wünschenswert, den Materialeinsatz so gering wie möglich zu wählen.

Es ist eine Aufgabe der vorliegenden Erfindung, ein Verfahren, eine Vorrichtung und ein Herstellungssystem bereitzustellen, mit dem die Nachteile der Verfahren und Vorrichtungen aus dem Stand der Technik überwunden werden. Insbesondere ist es die Aufgabe dieser Erfindung, Verfahren, Vorrichtungen und Systeme bereitzustellen, die besonders wirtschaftlich im Hinblick auf benötigte Produktionszeit, Downtime, Materialeinsatz und Energiebedarf sind.

Die hierin vorgestellte Erfindung löst diese Aufgaben.

### Vorrichtung

Erfindungsgemäß ist eine Vorrichtung zur additiven Herstellung eines Werkstückes umfassend
einen Satz Strahlungsquellen, der wenigstens eine Strahlungsquelle umfasst,
wenigstens ein Materialreservoir für ein Rohmaterial in Pulverform,
wenigstens eine Formenkammer, und
wenigstens eine Prozesskammer,

wobei die Formenkammer im Verhältnis zu der Prozesskammer beweglich ist und in einer Aktivposition zumindest teilweise unterhalb der Prozesskammer angeordnet ist,
wobei die Formenkammer an einem oberen Abschnitt eine Verschlusseinrichtung aufweist, die geeignet ist, einen Innenraum der Formenkammer vakuumdicht zu verschließen, und die geöffnet werden kann, so dass die Formenkammer in einem oberen Abschnitt eine Formenkammeröffnung aufweist,
wobei die Prozesskammer an einem unteren Abschnitt eine Verschlusseinrichtung aufweist, die geeignet ist, einen Innenraum der Prozesskammer vakuumdicht zu verschließen, und die geöffnet werden kann, so dass die Prozesskammer in einem unteren Abschnitt eine Prozesskammeröffnung aufweist,
wobei die Formenkammeröffnung und die Prozesskammeröffnung in der Aktivposition so angeordnet sind, dass die beiden Öffnungen zumindest teilweise zur Deckung gebracht werden, so dass ein Schleusenabschnitt erhalten wird,
wobei die Formenkammer und die Prozesskammer Kontaktelemente aufweisen, die so ausgestaltet sind, dass die Kontaktelemente der beiden Kammern in der Aktivposition wenigstens einen vakuumdichten Wandabschnitt des Schleusenabschnitts ausbilden,
wobei die Formenkammer eine vertikal bewegbare Hubfläche aufweist, die durch den Schleusenabschnitt in die Prozesskammer und in den Einflussbereich der Strahlungsquelle anhebbar ist,
wobei der Satz Strahlungsquellen in einem oberen Abschnitt der Prozesskammer (4) angeordnet ist, und
wobei die Formenkammer von der Aktivposition in eine Passivposition bewegbar ist, so dass eine zweite Formenkammer die Aktivposition einnehmen kann und wobei ein Teilvolumen der Prozesskammer (4), das dem oberen Abschnitt zugeordnet ist und den Mündungsbereich von Strahlungsquellen (2) umfasst, von dem Restvolumen der Prozesskammer (4) abtrennbar ist, und wobei die Prozesskammer (4) an dem oberen Ende des Restvolumens und/oder an dem unteren Ende des abzutrennenden Teilvolumens eine Verschlusseinrichtung aufweist, die eine vakuumdichte Abtrennung des Teilvolumens ermöglicht, und wobei der Satz Strahlungsquellen von der Prozesskammer (4) abnehmbar ist.

Der Begriff "Werkstück" bezieht sich erfindungsgemäß sowohl auf ein einzelnes Werkstück als auch auf eine Mehrzahl an Werkstücken. Insbesondere sind mit der Vorrichtung und dem Verfahren auch mehrere Werkstücke gleichzeitig bzw. gemeinsam mit anderen Werkstücken herstellbar.

Die erfindungsgemäße Vorrichtung bietet aufgrund der bewegbaren Formenkammer die Möglichkeit, ein zweites Werkstück in einer zweiten Formenkammer zu fertigen, während ein erstes Werkstück in einer ersten Formenkammer in einer Passivposition abkühlt oder anderweitig nachbearbeitet wird. "Passivposition" bezeichnet dabei jede Position der Formenkammer, die nicht die "Aktivposition" ist. Die "Aktivposition" ist diejenige Position der Formenkammer zumindest teilweise unterhalb der Prozesskammer, in der sich die Formenkammer während der Herstellung eines Werkstücks befindet. Durch die Möglichkeit, dass das erste Werkstück in der ersten Formenkammer in einer Passivposition abkühlen kann, wird die Wirtschaftlichkeit der Anlage stark erhöht, denn die Abkühlung nimmt erhebliche Zeit in Anspruch. Ferner bietet die Vorrichtung durch die beiden Verschlusseinrichtungen, an einem oberen Abschnitt der Formenkammer und an einem unteren Abschnitt der Prozesskammer, die Möglichkeit, die beiden Kammern ohne Verlust der darin eingestellten Atmosphäre voneinander zu trennen. Durch den vakuumdichten Verschluss der beiden Kammern wird darüber hinaus auch erreicht, dass in der nach der Fertigstellung eines Werkstücks durch die Verschlusseinrichtung verschlossenen Formenkammer ein Kühlfluid zur Kühlung des fertig gestellten Werkstücks eingesetzt werden kann. Ferner ermöglicht der Einsatz der beiden Verschlusseinrichtungen die Aufrechterhaltung des Vakuums in der Prozesskammer auch nach Fortbewegung der ersten Formenkammer. Dies ist besonders vorteilhaft, da die Prozesskammer gerade bei der Fertigung großer Werkstücke oder einer Mehrzahl von Werkstücken eine beachtliche Größe haben kann. Für die Evakuierung einer großen Prozesskammer wird viel Zeit und Energie benötigt. Dies gilt umso mehr, da die Prozesskammer zumindest in einer bevorzugten Ausführungsform mit einem Materialreservoir in Verbindung steht, das eine erhebliche Menge Pulver enthält. Die Evakuierung eines pulverhaltigen Volumens ist besonders langwierig, was insbesondere für feinkörnige Pulver gilt.

Somit ist die erfindungsgemäße Vorrichtung besonders vorteilhaft für Verfahren, die zumindest teilweise unter Vakuum durchgeführt werden.

Das Verfahren und die Vorrichtung dieser Erfindung eignen sich insbesondere für die Herstellung von großen Werkstücken oder einer Mehrzahl von Werkstücken. Dafür bietet die Vorrichtung ein Bauvolumen in der Prozesskammer von vorzugsweise wenigstens 1 m³, insbesondere sogar wenigstens 2 m³. Entsprechend wird für die Abkühlung nach der Herstellung viel Zeit benötigt, insbesondere wenigstens ein Tag oder mehrere Tage (insbesondere bei großen Werkstücken). Das Materialreservoir dient dazu, das Rohmaterial in Pulverform für das Herstellungsverfahren vorzuhalten. Dabei kann das Materialreservoir Rohmaterial für die Durchführung mehrerer Herstellungsgänge enthalten. Das Materialreservoir kann in Form von einer oder mehreren zumindest abschnittsweise trichterförmigen Kammern in einem oberen Teil der Prozesskammer angeordnet sein. In einer vorteilhaften Ausführungsform weist die Vorrichtung wenigstens zwei Materialreservoire auf; diese können insbesondere auf gegenüberliegenden Seiten des Einflussbereichs der Strahlungsquelle angeordnet sein. Vorzugsweise ist das Materialreservoir oberhalb derjenigen Ebene angeordnet, in der der Schmelz- bzw. Sintervorgang stattfindet. Auf diese Weise kann das Rohmaterial in Pulverform der Schwerkraft folgend in den Arbeitsbereich hinabfließen bzw. dort verteilt werden.

Das Rohmaterial ist vorzugsweise ein Metall oder eine Metalllegierung. Besonders bevorzugt sind Titan und Titanlegierungen, Nickelbasislegierungen, Superlegierungen und Stähle. Um Werkstücke mit hoher Oberflächenqualität zu erhalten, sollte das Rohmaterial Partikelgrößen aufweisen, die unterhalb von 500 µm, insbesondere unterhalb von 400 µm, unterhalb von 300 µm oder unterhalb von 200 µm liegen. Die Partikelgrößen des Rohmaterials sollten aber auch nicht zu klein sein, da dies die Fließfähigkeit des Pulvers verschlechtert und dessen Oberfläche vergrößert, sodass die Einstellung eines Vakuums umso mehr Zeit in Anspruch nimmt. Kleinere Partikel verlangsamen ferner den Aufbau des Werkstücks. In einer bevorzugten Ausführungsform beträgt daher die Partikelgröße des Rohmaterials wenigstens 1 µm, insbesondere wenigstens 10 µm, bevorzugt wenigstens 20 µm und besonders bevorzugt wenigstens 50 µm. Besonders bevorzugt beträgt die Partikelgröße 50 bis 150 µm. Unter "Partikelgröße" wird erfindungsgemäß bevorzugt die nach dem Prinzip der dynamischen Lichtstreuung gemessene durchschnittliche Partikelgröße verstanden.

Wenn nichts anderes angegeben ist, bedeutet "Kammer", wie in "Formenkammer" und "Prozesskammer", lediglich, dass es sich bei einem so bezeichneten Bauelement um einen nach allen Seiten verschließbaren Raum handelt, sodass eine kontrollierte Atmosphäre wie insbesondere ein Vakuum eingestellt werden kann. Eine Kammer kann erfindungsgemäß jedwede äußere Form annehmen. Die Formenkammer ist erfindungsgemäß die Kammer, in der sich das Werkstück nach seiner Herstellung am Ende des Verfahrens, insbesondere zusammen mit der Hubfläche, befindet. Der Formenkammer ist die vertikal bewegbare Hubfläche zugeordnet, die es ermöglicht, ein in der Prozesskammer fertiggestelltes Werkstück von dort in die Formenkammer abzusenken. Die Prozesskammer ist erfindungsgemäß diejenige Kammer, in der die eigentliche additive Herstellung des Werkstückes stattfindet. Insbesondere befindet sich der Einflussbereich der Strahlungsquelle in der Prozesskammer.

Innenräume der Formenkammer und der Prozesskammer sind vakuumdicht verschließbar. Dies bedeutet, dass die Volumenleckrate der Kammer weniger als 1*10⁻² mbar*l/s, insbesondere weniger als 5*10⁻³ mbar*l/s, beträgt. Die Volumenleckrate wird vorzugsweise bei 20°C und 1013 hPa Umgebungsdruck gemessen. Auf diese Weise lässt sich in beiden Kammern die gewünschte Atmosphäre einstellen und halten. Vakuumdichte Kammern werden für die additive Herstellung unter Verwendung von Elektronenstrahlkanonen benötigt, da hierbei - anders als bei Herstellungsverfahren z.B. mit Lasern - ein Vakuum und nicht lediglich eine Schutzgasatmosphäre gehalten werden muss.

Die Formenkammer ist im Verhältnis zu der Prozesskammer beweglich. Dies bedeutet insbesondere, dass die Formenkammer unter die Prozesskammer geschoben bzw. verfahren werden kann. Zu diesem Zweck kann die Formenkammer selbst mit Rädern, Rollen oder anderen Mitteln versehen sein, die die Beweglichkeit der Formenkammer sicherstellen. Oder die Formenkammer kann auf einem Wagen angeordnet sein.

Die Formenkammer weist an einem oberen Abschnitt eine Formenkammeröffnung auf. Die Formenkammeröffnung ist mit einer Verschlusseinrichtung vakuumdicht verschließbar. Die Formenkammeröffnung ist wenigstens so groß, dass die vertikal bewegbare Hubfläche durch die Öffnung hindurch in den Einflussbereich der Strahlungsquelle bewegt werden kann. Bei der Verschlusseinrichtung kann es sich beispielsweise um einen Deckel, eine Klappe, eine Türe, ein Ventil, eine Schleuse oder eine sonstige dem Fachmann bekannte Einrichtung handeln.

Die Prozesskammer weist an einem unteren Abschnitt eine Prozesskammeröffnung auf. Die Prozesskammeröffnung ist mit einer Verschlusseinrichtung vakuumdicht verschließbar. Die Prozesskammeröffnung ist wenigstens so groß, dass die vertikal bewegbare Hubfläche durch die Öffnung hindurch aus der Prozesskammer in die Formenkammer bewegt werden kann. Bei der Verschlusseinrichtung kann es sich beispielsweise um einen Deckel, eine Klappe, eine Türe, ein Ventil, eine Schleuse oder eine sonstige dem Fachmann bekannte Einrichtung handeln.

Formenkammer und Prozesskammer weisen Kontaktelemente auf, die so aufeinander abgestimmt sind, dass sie in der Aktivposition wenigstens einen vakuumdichten Wandabschnitt des Schleusenabschnitts ausbilden. Bei den Kontaktelementen handelt es sich insbesondere um Bauteile, die eine vakuumdichte Verbindung miteinander eingehen. Beispielsweise kann es sich bei den Kontaktelementen um eine oder mehrere Dichtungen handeln und/oder um hinsichtlich ihrer äußeren Form derart angepasste oder angeglichene Bauteile (zum Beispiel Flansche), dass die gebildete Verbindung vakuumdicht ist. Der Schleusenabschnitt ist ein zwischen den Verschlusseinrichtungen und den Kontaktelementen vorhandener Raum. Die Ausgestaltung trägt der bevorzugten Verwendung der Vorrichtung für das additive Herstellen von Werkstücken mit Elektronenstrahlquellen im Vakuum Rechnung. Die Anforderungen an die Dichtigkeit sind für die Durchführung des Verfahrens im Vakuum wesentlich höher als beispielsweise bei der Verwendung von Schutzgasatmosphäre.

Die Formenkammeröffnung und die Prozesskammeröffnung werden in der Aktivposition so angeordnet, dass die beiden Öffnungen zumindest teilweise miteinander zur Deckung gebracht werden. Damit ist gemeint, dass die beiden Öffnungen sich horizontal zumindest teilweise überlappen. Sie überlappen zumindest in dem Maße, dass die vertikal bewegbare Hubfläche durch die Öffnungen hindurch bewegt werden kann.

Die Hubfläche ist durch den Schleusenabschnitt in den Einflussbereich der Strahlungsquelle anhebbar. Auf die Hubfläche wird während des erfindungsgemäßen Verfahrens Rohmaterial in Pulverform aufgetragen. Das Rohmaterial in Pulverform wird geschmolzen bzw. gesintert. Erfindungsgemäß bedeutet die Bedingung, dass die Hubfläche in den Einflussbereich der Strahlungsquelle anhebbar ist also, dass die Hubfläche zumindest so hoch angehoben werden kann, dass eine auf der Hubfläche befindliche Pulverschicht vermittelt durch die Strahlung der Strahlungsquelle geschmolzen bzw. gesintert werden kann.

In einer bevorzugten Ausführungsform ist die Hubfläche aus einem Material mit einer hohen Wärmeleitfähigkeit gefertigt. Auf diese Weise kann die Wärmeableitung weiter verbessert werden. Eine "hohe Wärmeleitfähigkeit" ist insbesondere eine Wärmeleitfähigkeit bei 0 °C von wenigstens 13 W/(m*K), mehr bevorzugt wenigstens 40 W/(m*K), ferner bevorzugt wenigstens 100 W/(m*K) und ganz besonders bevorzugt wenigstens 200 W/(m*K). In erfindungsgemäß bevorzugten Ausführungsformen ist die Wärmeleitfähigkeit sogar noch höher, insbesondere wenigstens 250 W/(m*K) und besonders bevorzugt wenigstens 300 W/(m*K). Geeignete Materialien sind Metalle und Metalllegierungen, insbesondere Stahl, Kupfer oder Kupferlegierungen. Der Einsatz von Hubflächen mit hoher Wärmeleitfähigkeit ermöglicht eine signifikante Beschleunigung der Abkühlgeschwindigkeit und damit des gesamten Verfahrens. Gerade bei Durchführung des Verfahrens im Vakuum - wie es erfindungsgemäß bevorzugt ist - kann der Einsatz solcher Hubflächen die ansonsten wegen fehlender Konvektion stark eingeschränkte Abkühlung der Werkstücke verbessern.

In einer Ausführungsform kann die Hubfläche mit einem Fluid temperiert werden. Das Temperieren kann ein Erwärmen oder Kühlen sein. Durch ein Kühlen der Hubfläche mit einem Fluid kann die Abkühlung weiter beschleunigt werden. Alternativ kann die Hubfläche erwärmt werden. Durch ein Erwärmen der Hubfläche kann das Rohmaterial vor dem Schmelzen bzw. Sintern vorgewärmt werden. Das Fluid zum Temperieren ist bei Standardbedingungen (DIN 1343:1990) flüssig oder gasförmig. Flüssige Fluide sind bevorzugt. Das Fluid ist vorzugsweise ausgewählt aus Wasser, Thermalöl, Inertgas, Luft und flüssigem Metall (z.B. NaK, Wood'sche Legierung). Wasser ist aufgrund seiner geringen Kosten bevorzugt. Der Einsatz von gasförmigem Fluid ist aufgrund der geringeren Wärmekapazität weniger vorteilhaft, bei geringerer beabsichtigter Kühlleistung aber möglich.

Mit einem "Satz Strahlungsquellen" ist erfindungsgemäß die Gesamtheit der für die additive Herstellung verwendeten Strahlungsquellen innerhalb einer Vorrichtung gemeint. Der Satz Strahlungsquellen kann dabei konstruktiv miteinander verbunden sein, zum Beispiel durch Befestigung aller Strahlungsquellen innerhalb eines Satzes an einer Befestigungsplatte oder auf andere Weise. Alternativ können die Strahlungsquellen jeweils einzeln an der Vorrichtung befestigt sein. Geeignete Strahlungsquellen sind Elektronenstrahlkanonen und Laser, wobei Elektronenstrahlkanonen bevorzugt sind. Elektronenstrahlkanonen haben gegenüber Laser den Vorteil höherer, und flexibel einstellbarer Leistungsdichten. Damit sind höhere Schmelztemperaturen realisierbar. Damit ist die Elektronenstrahlkanone gerade bei Rohmaterialien mit hoher Wärmeleitfähigkeit (Metalle, Metalllegierungen) als Strahlungsquelle vorteilhaft.

Darüber hinaus bietet eine Elektronenstrahlkanone die Möglichkeit, verhältnismäßig große Strahldurchmesser bzw. Spotgrößen zu verwenden, so dass auch ein Vorwärmen mit der Strahlungsquelle gut durchführbar ist. Insbesondere lässt sich das Rohmaterial vorsintern, so dass Pulverkörner in geringem Maße miteinander versintern. Das Vorsintern verhindert das durch elektrostatische Aufladung bedingte Zerstäuben ("smoke effect"), das andernfalls bei Bestrahlung mit Elektronenstrahlung zu befürchten ist. Ferner wird die Wärmeleitung durch das Vorsintern verbessern, da die Pulverkörner miteinander in engeren Kontakt gebracht werden.

In einer erfindungsgemäß bevorzugten Ausführungsform ist die Strahlungsquelle eine Elektronenstrahlkanone. Enthält der Satz Strahlungsquellen mehr als eine Strahlungsquelle, so sind vorzugsweise alle Strahlungsquellen des Satzes Elektronenstrahlkanonen. In einer bevorzugten Ausführungsform weist der Satz Strahlungsquellen wenigstens zwei, wenigstens drei oder wenigstens vier Strahlungsquellen auf. Die Verwendung mehrerer Strahlungsquellen hat sich als vorteilhaft erwiesen, da auf diese Weise auch bei Werkstücken mit großer Querschnittsfläche oder einer Mehrzahl von Werkstücken eine gleichmäßig gute Fokussierung auf die zu bestrahlenden Abschnitte möglich ist und die Arbeitsgeschwindigkeit deutlich erhöht werden kann.

Erfindungsgemäß ist der Satz Strahlungsquellen in einem oberen Abschnitt der Prozesskammer angeordnet, insbesondere oberhalb des Arbeitstisches, an dem die additive Herstellung des Werkstückes stattfindet. In erfindungsgemäßen Ausführungsformen ist ein Teilvolumen der Prozesskammer, das dem oberen Abschnitt zugeordnet ist und insbesondere den Mündungsbereich der Strahlungsquellen umfasst, von dem Restvolumen der Prozesskammer abtrennbar. In erfindungsgemäßen Ausführungsformen ist der Satz Strahlungsquellen von der Prozesskammer abnehmbar. Diese erfindungsgemäße Ausführungsform hat den Vorteil, dass der Satz Strahlungsquellen - entweder insgesamt als Satz oder in Form einzelner Strahlungsquellen - von der Prozesskammer gelöst werden kann, insbesondere ohne dass in dem Restvolumen der Prozesskammer eine eingestellte Atmosphäre/Vakuum verloren geht. Dabei weist die Prozesskammer an dem oberen Ende des Restvolumens und/oder an dem unteren Ende des abzutrennenden Teilvolumens eine Verschlusseinrichtung auf, die eine vakuumdichte Abtrennung des Teilvolumens ermöglicht.

Der Satz Strahlungsquellen bzw. einzelne Strahlungsquellen kann sodann auf einer anderen, insbesondere einer erfindungsgemäßen, Vorrichtung zum Einsatz kommen. Die Möglichkeit, Strahlungsquellen abzunehmen ist besonders vorteilhaft während die erste Vorrichtung, von der die Strahlungsquellen gelöst wurden, gewartet, gereinigt und/oder für die Durchführung eines weiteren Herstellungsverfahrens vorbereitet wird. Auf diese Weise können die Strahlungsquellen an einer anderen Vorrichtung weiter verwendet werden, so dass sie optimal ausgelastet werden.

Um das Volumen, das zusammen mit dem Satz Strahlungsquellen gelöst werden kann, möglichst gering zu halten, beträgt das Verhältnis des abtrennbaren Teilvolumens zum verbleibenden Restvolumen vorzugsweise höchstens eins zu vier, insbesondere höchstens eins zu fünf und besonders bevorzugt höchstens eins zu sechs.

In einer Ausführungsform weist das Materialreservoir eine optional verschließbare Öffnung zur Prozesskammer auf. Diese Öffnung ist vorzugsweise dem Restvolumen zugeordnet, sodass ein in dem Materialreservoir eingestelltes Vakuum trotz Ablösung von Strahlungsquellen durch Verschluss der Verschlusseinrichtung erhalten werden kann.

Für die Einstellung eines Vakuums in der Prozesskammer und/oder der Formenkammer weist die Vorrichtung vorzugsweise wenigstens eine Vakuumpumpe, insbesondere eine Diffusionspumpe, auf. In einer Ausführungsform ist eine Vakuumpumpe der Prozesskammer zugeordnet, d.h. sie ist so mit der Prozesskammer verbunden, dass sie in der Prozesskammer ein Vakuum herstellen kann. Wenn die Formenkammer mit der Prozesskammer verbunden ist, kann mit derselben Vakuumpumpe auch in der Formenkammer ein Vakuum hergestellt werden. Die Vorrichtung kann mehrere Vakuumpumpen aufweisen. In einer Ausführungsform ist auch der Formenkammer eine Vakuumpumpe zugeordnet.

In einer Ausführungsform ist die Formenkammer eingerichtet, ein darin befindliches Werkstück mit einem Kühlgas zu kühlen. Vorzugsweise weist die Formenkammer wenigstens einen Einlass und/oder wenigstens einen Auslass für das Kühlgas auf. In einer Ausführungsform weist die Formenkammer wenigstens ein Mittel zum Umwälzen einer in der Formenkammer befindlichen Menge Kühlgas auf. Das Mittel kann insbesondere ein Lüfter oder eine Umwälzpumpe sein. Die erfindungsgemäße Vorrichtung ermöglicht es, Formenkammer und Prozesskammer jeweils zu verschließen, sodass unterschiedliche Atmosphären (z.B. Vakuum oder Inertgas) in den beiden Kammern eingestellt werden können. Insbesondere kann in der Formenkammer, in der ein Werkstück abkühlt, die Abkühlung mit einem Kühlgas unterstützt werden, ohne dass ein Vakuum in der Prozesskammer beeinträchtigt wird. Dabei strömt in einer Ausführungsform Kühlgas durch einen Einlass. Insbesondere strömt das Kühlgas durch einen Auslass wieder aus der Formenkammer heraus und/oder das Kühlgas wird in der Formenkammer umgewälzt, um eine optimale Kühlwirkung zu erzielen.

In einer Ausführungsform ist das Kühlgas ein Inertgas insbesondere Helium, Argon, Xenon und/oder Stickstoff.

### Herstellungssystem

Erfindungsgemäß ist auch ein Herstellungssystem für Werkstücke umfassend eine Anzahl von n ≥ 2 erfindungsgemäßen Vorrichtungen mit der Maßgabe, dass das Herstellungssystem höchstens n - 1 Sätze Strahlungsquellen aufweist. Ein solches Herstellungssystem ist besonders vorteilhaft im Hinblick auf die Wirtschaftlichkeit der Herstellung von Werkstücken, weil für mehrere Vorrichtungen nicht pro Vorrichtung ein Satz Strahlungsquellen erforderlich ist. Vielmehr kann ein Satz Strahlungsquellen für mehrere Vorrichtungen verwendet werden. Dadurch kann die Auslastung der Strahlungsquellen - einem sehr teuren Bauteil der Vorrichtung - erhöht werden, da diese während der Reinigung, Wartung und Vorbereitung der Vorrichtung an einer anderen Vorrichtung Verwendung finden. Im Zusammenspiel mit einer Mehrzahl an Formenkammern können große Stückzahlen an Werkstücken mit dem Herstellungssystem hergestellt werden.

### Verfahren

Erfindungsgemäß ist auch ein Verfahren zur additiven Herstellung von Werkstücken, mit folgenden Schritten
a. Bereitstellen einer erfindungsgemäßen Vorrichtung oder Bereitstellen eines erfindungsgemäßen Herstellungssystems,
b. Bereitstellen einer Formenkammer in einer Aktivposition mit in den Einflussbereich der wenigstens einen Strahlungsquelle in der Prozesskammer angehobenen Hubfläche,
c. Vorlegen einer Schicht Rohmaterials auf der Hubfläche,
d. Beaufschlagen von der gewünschten Form des Werkstückes entsprechenden Bereichen der ersten Materialschicht mit Strahlung aus der Strahlungsquelle, so dass das Rohmaterial in den Bereichen zumindest teilweise wenigstens auf seinen Schmelzpunkt erhitzt wird,
e. Absenken der Hubfläche, insbesondere um die Dicke der nachfolgend aufzutragenden Schicht,
f. Vorlegen einer weiteren Schicht Rohmaterials auf der Materialschicht,
g. Beaufschlagen von der gewünschten Form des Werkstückes entsprechenden Bereichen der weiteren Materialschicht mit Strahlung aus der Strahlungsquelle, so dass das Rohmaterial in den Bereichen zumindest teilweise wenigstens auf seinen Schmelzpunkt erhitzt wird,
h. Wiederholung der Schritte e. bis g. bis zur Fertigstellung des Werkstückes,
i. Absenken der Hubfläche mit darauf befindlichem Werkstück aus der Prozesskammer, durch den Schleusenabschnitt in die Formenkammer,
j. Verschließen des Innenraums der Formenkammer mit der Verschlusseinrichtung,
k. Fortbewegen der Formenkammer aus der Aktivposition in eine Passivposition.

Das erfindungsgemäße Verfahren erlaubt die besonders effiziente Herstellung von Werkstücken in einem additiven Herstellungsprozess. Besonders bevorzugt ist die Durchführung des Verfahrens mit mehr als einer Formenkammer. Vorzugsweise umfasst das erfindungsgemäße Verfahren im Anschluss an Schritt k. den weiteren Schritt:
I. Bewegen einer weiteren Formenkammer aus einer Passivposition in die Aktivposition und insbesondere Wiederholung der Schritte b. bis k.

Auf diese Weise kann die Vorrichtung mit einer Mehrzahl an Formenkammern betrieben werden. Die maximale Anzahl der Formenkammern ist grundsätzlich unbegrenzt, wird in der Praxis aber durch die benötigte Abkühlzeit und Entladezeit der Formenkammern bestimmt. Erfindungsgemäß sind insbesondere Verfahren, in denen wenigstens zwei, wenigstens drei, wenigstens vier, oder wenigstens fünf Formenkammern eingesetzt werden.

Erfindungsgemäß umfasst das Verfahren zur weiteren Erhöhung der Auslastung und Effizienzsteigerung die weiteren Schritte:
- Abnehmen des Satzes Strahlungsquellen von der Vorrichtung,
- Verbringen des Satzes Strahlungsquellen zu einer weiteren Vorrichtung,
- Anbringen des Satzes Strahlungsquellen an der weiteren Vorrichtung.

Dabei ist es bevorzugt, dass vor dem Abnehmen des Satzes Strahlungsquellen ein Abtrennen eines dem oberen Abschnitt zugeordneten Teilvolumens der Prozesskammer erfolgt.

Das erfindungsgemäße Verfahren wird vorzugsweise unter Vakuum durchgeführt. Dies entspricht bevorzugt einem Druck von höchstens 10⁻¹ mbar, vorzugsweise höchstens 10⁻² mbar oder höchstens 10⁻³ mbar. Vorzugsweise herrscht zumindest während der Schritte d. bis h. und insbesondere während der Schritte c. bis j. in der Prozesskammer und insbesondere auch in der Formenkammer der genannte Druck.

In einer Ausführungsform erfolgt vor dem Beaufschlagen der Materialschicht in Schritt d. und/oder vor dem Beaufschlagen der Materialschicht in Schritt g. ein Vorwärmen und/oder Vorsintern der Materialschicht. Das Vorwärmen bzw. Vorsintern kann unter Verwendung einer Wärmequelle erfolgen, die insbesondere mit der Strahlungsquelle identisch sein kann. Das Vorwärmen bzw. Vorsintern hat den Vorteil, dass nicht der gesamte Wärmeeintrag in einem Zuge beim Aufbau des Werkstückes erfolgt. Gerade bei Verwendung von Elektronenstrahlkanonen kann es sonst zu einem Zerstäuben des Rohmaterials aufgrund elektrostatischer Aufladung kommen.

### Kurzbeschreibung der Figuren

**Figur 1** zeigt einen Querschnitt einer erfindungsgemäßen Vorrichtung mit Hubfläche im Einflussbereich der Strahlungsquelle.
**Figur 2** zeigt einen Querschnitt einer erfindungsgemäßen Vorrichtung mit einem teilweise fertiggestellten Werkstück auf der Hubfläche.
**Figur 3** zeigt einen Querschnitt einer erfindungsgemäßen Vorrichtung mit einem fertiggestellten Werkstück auf der Hubfläche nach Absenkung in die Formenkammer.
**Figur 4** zeigt eine Außenansicht auf eine erfindungsgemäße Vorrichtung mit zwei Formenkammern.
**Figur 5** zeigt einen Schnitt der Vorrichtung aus Figur 4.
**Figur 6** zeigt eine Außenansicht eines erfindungsgemäßen Herstellungssystems mit zwei Vorrichtungen.

### Beschreibung der Figuren

Die nachfolgend mit Bezug zu den Figuren beschriebenen erfindungsgemäßen Ausführungsformen stellen lediglich bevorzugte Ausführungsformen der Erfindung dar und schränken den Schutzgegenstand nicht ein. Im Rahmen der Figurenbeschreibung beschriebene Merkmale der Vorrichtungen, Verfahren und Systeme dieser Erfindung stellen auch im Hinblick auf die zuvor allgemein beschriebenen Vorrichtungen, Verfahren und Systeme bevorzugte Merkmale dar.

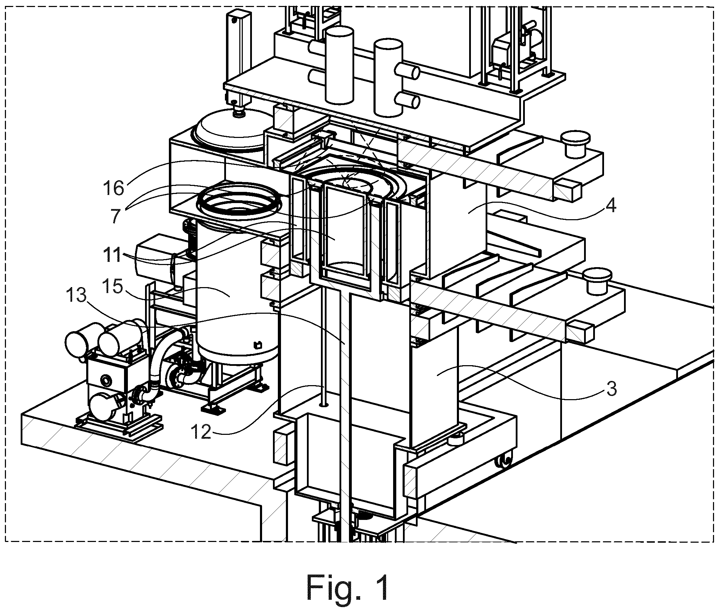

**Figur 1** zeigt eine erfindungsgemäße Vorrichtung mit einer Formenkammer 3, die unterhalb einer Prozesskammer 4 angeordnet ist. Eine Hubfläche 7 ist mit einer Hebevorrichtung 13 in den Einflussbereich von Strahlungsquellen gehoben. Neben der Hubfläche wird auch ein Bauraum von der Formenkammer 3 in die Prozesskammer 4 gehoben. Der Bauraum enthält das Bauvolumen. Er befindet sich während der Herstellung in der Prozesskammer 4 und kann nach der Herstellung zusammen mit der Hubfläche 7, darauf befindlichen Werkstücken 10 und nicht verwendetem Rohmaterial in die Formenkammer 3 abgesenkt werden. Die Prozesskammer 4 enthält ein Bauvolumen, in dem Füllkörper 11 angeordnet sind. Die Füllkörper 11 werden mit einem Kühlfluid gekühlt, dass über eine Leitung 12 in die Füllkörper 11 eingeleitet werden kann. Die Verwendung von Füllkörpern 11 ist erfindungsgemäß bevorzugt, denn die Füllkörper 11 verbessern die Ableitung von Wärme aus dem Werkstück und verkleinern das Bauvolumen, so dass Rohmaterial eingespart werden kann. Allerdings ist diese Erfindung nicht auf Ausführungsformen mit Füllkörpern 11 beschränkt, sondern betrifft gleichermaßen Verfahren, Vorrichtungen und Systeme, die ohne Füllkörper betrieben werden.

Die dargestellte Position der Formenkammer 3 stellt die sogenannte Aktivposition dar, denn zwischen Formenkammer 3 Prozesskammer 4 ist eine Öffnung ausgebildet, die groß genug ist, dass der Bauraum mit der Hubfläche 7 durch diese Öffnung hindurch nach oben bewegbar ist. Im Hinblick auf das erfindungsgemäße Verfahren ist der Schritt des Bereitstellens einer Vorrichtung und des Bereitstellens einer Formenkammer in einer Aktivposition mit in den Einflussbereich der wenigstens einen Strahlungsquelle in der Prozesskammer angehobenen Hubfläche 7 in der Figur 1 ausgeführt. Im erfindungsgemäßen Verfahren folgt der Schritt des Vorlegens einer Schicht Rohmaterials auf der Hubfläche 7. Die gezeigte Vorrichtung weist ferner eine Auftragsvorrichtung 16 auf, die in Form eines Pulververteilelements (hier ein Rakel) ausgestaltet ist. Erfindungsgemäß sind auch andere Auftragsvorrichtungen denkbar, insbesondere über der Hubfläche 7 schwenkbare Pulverbehälter mit verschließbarer Pulveraustrittsöffnung. Die Figur zeigt weiter eine Vakuumpumpe 15.

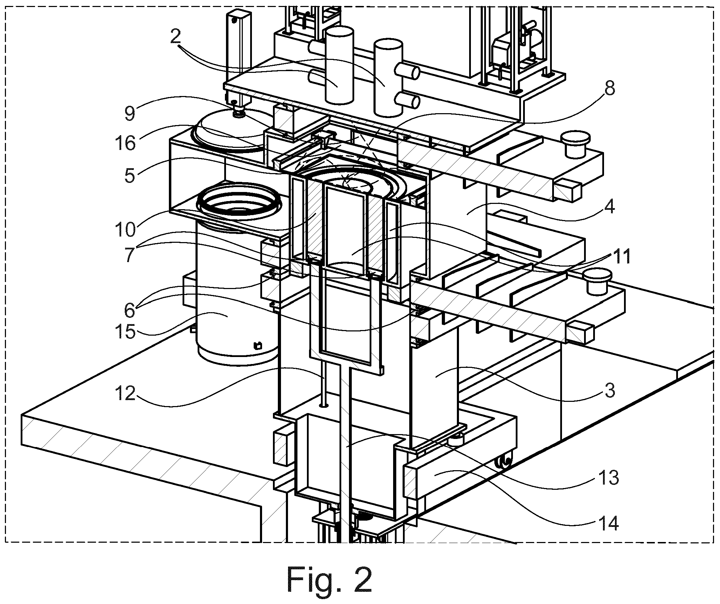

**Figur 2** zeigt neben den in Figur 1 bereits gezeigten Komponenten weitere optionale und bevorzugte Bauteile der erfindungsgemäßen Vorrichtung. In Figur 2 sind insbesondere gezeigt zwei Strahlungsquellen 2 aus einem Satz von insgesamt vier Strahlungsquellen. Ein abtrennbares Teilvolumen 8 befindet sich in einem oberen Abschnitt der Prozesskammer 4. Eine Öffnung 9 des Materialreservoirs ist gezeigt, die auf den Arbeitstisch 5 mündet. Auf dem Arbeitstisch 5 ist eine Auftragsvorrichtung 16 vorgesehen. Die Figur 2 zeigt die Vorrichtung in einem Betriebszustand, in dem ein Werkstück 10 bereits größtenteils fertiggestellt ist. Die Hubfläche 7 ist bereits fast bis in den Schleusenabschnitt abgesenkt, der sich zwischen den Kontaktelementen 6 befindet. Der Bauraum befindet sich weiterhin in der Prozesskammer 4. Die Formenkammer ist auf einem Fahrwagen 14 angeordnet.

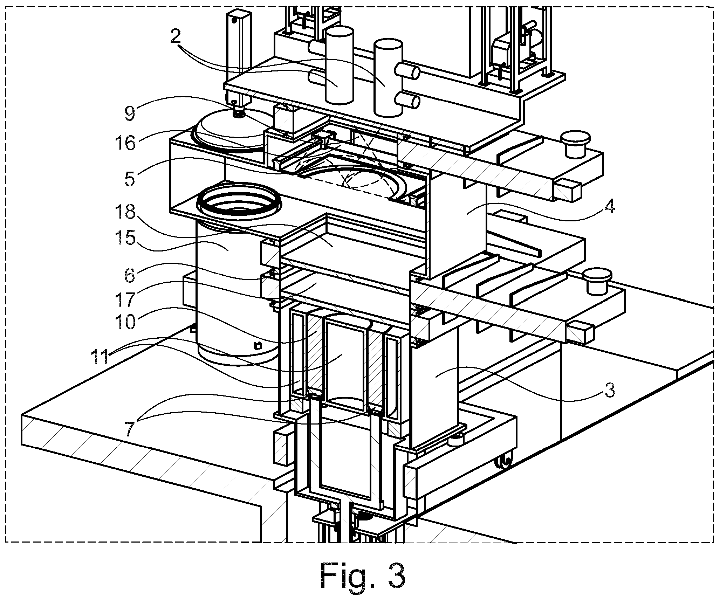

**Figur 3** zeigt eine erfindungsgemäße Vorrichtung in einem im Vergleich zu Figur 1 und Figur 2 weiter fortgeschrittenen Verfahrensstadium. Das Werkstück 10 ist in diesem Verfahrensstadium bereits vollständig aufgebaut. Es befindet sich zusammen mit dem Bauraum und der Hubfläche 7 in der Formenkammer 3, deren Verschlusseinrichtung 17 geschlossen ist, sodass ein Innenraum der Formenkammer 3 vakuumdicht verschlossen ist. Auch die Verschlusseinrichtung 18 der Prozesskammer 4 ist geschlossen. Die Formenkammer 3 befindet sich noch in der Aktivposition. Die Kontaktelemente 6 bilden weiter einen vakuumdichten Wandabschnitt des Schleusenabschnitts. Ein bevorzugter weiterer Verfahrensschritt besteht in dem Fortbewegen der Formenkammer 3 aus der Aktivposition in eine Passivposition.

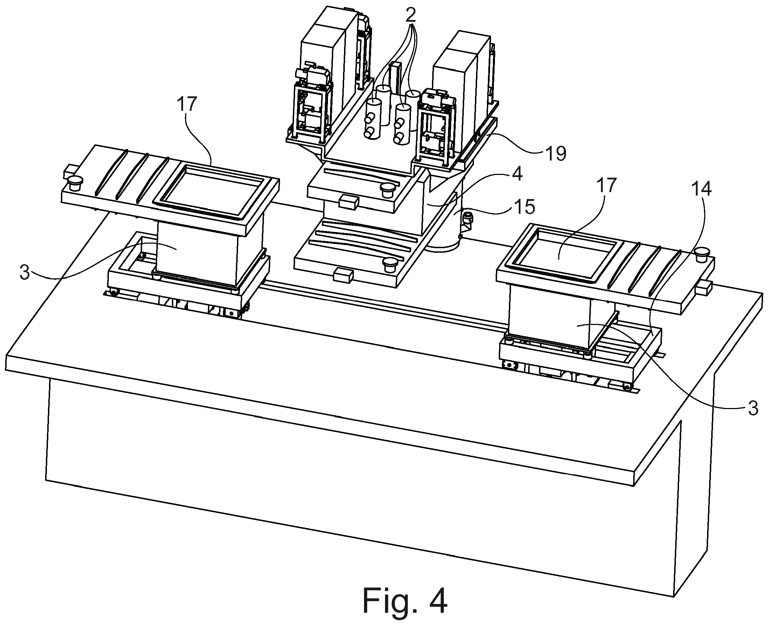

**Figur 4** zeigt eine erfindungsgemäße Vorrichtung in Außenansicht. Die Vorrichtung umfasst zwei Formenkammern 3, die sich beide in Passivpositionen befinden. In der Aktivposition befindet sich keine Formenkammer. Die Prozesskammer 4 ist somit leer. Die Formenkammern 3 sind durch die jeweilige Verschlusseinrichtung 17 verschlossen. In einem bevorzugten nächsten Verfahrensschritt wird eine der Formenkammern 3 in die Aktivposition bewegt. In dieser Figur ist auch ein Materialreservoir 19 gezeigt. Ferner bilden vier Strahlungsquellen 2 einen Satz Strahlungsquellen der Vorrichtung.

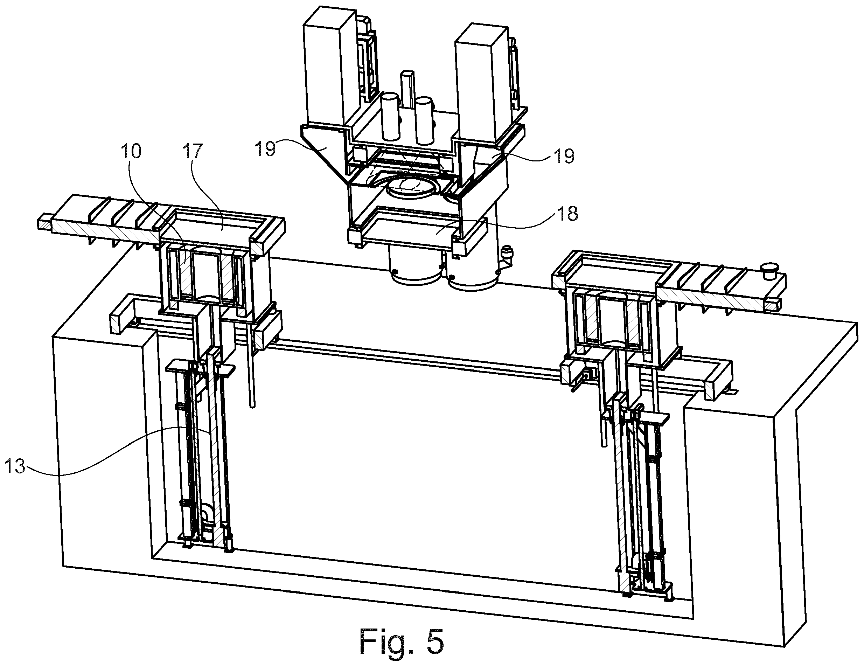

**Figur 5** zeigt eine Schnittansicht einer erfindungsgemäßen Vorrichtung mit zwei Formenkammern 3, in denen jeweils fertig gestellte Werkstücke 10 angeordnet sind. Die Formenkammern 3 befinden sich also nach Herstellung der Werkstücke 10 in Passivposition mit geschlossener Verschlusseinrichtung 17. Die Werkstücke 10 kühlen ab oder erwarten weitere Arbeitsschritte, zum Beispiel die Entnahme des Werkstückes 10. Auch in dieser Abbildung sind Materialreservoire 19 auf gegenüberliegenden Seiten der Prozesskammer angeordnet. Die Verschlusseinrichtung 18 der Prozesskammer ist verschlossen.

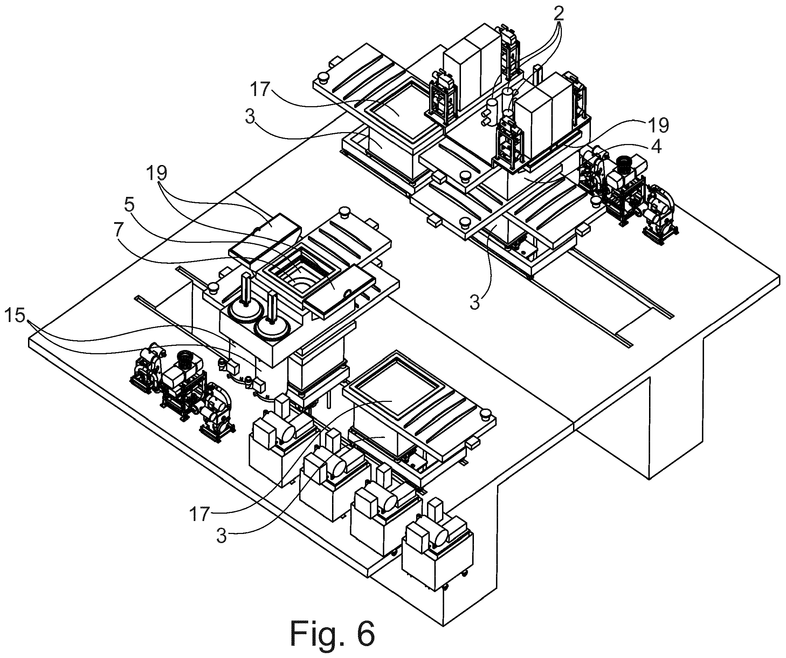

**Figur 6** zeigt ein erfindungsgemäßes Herstellungssystem für Werkstücke. Das System umfasst zwei erfindungsgemäße Vorrichtungen mit je zwei Formenkammern 3, von denen sich je eine Formenkammer 3 in Aktivposition und je eine Formenkammer 3 in Passivposition mit geschlossener Verschlusseinrichtung 17 befinden. Auf einer der beiden Vorrichtungen befindet sich ein Satz Strahlungsquellen 2, während die andere Vorrichtung ohne Strahlungsquellen 2 gezeigt ist, wobei die für die Abtrennung des abtrennbaren Teilvolumens vorgesehene Verschlusseinrichtung geöffnet ist und den Blick auf den Arbeitstisch 5 mit angehobener Hubfläche 7 freigibt.

### Bezugszeichenliste

- 2: Strahlungsquelle
- 3: Formenkammer
- 4: Prozesskammer
- 5: Arbeitstisch
- 6: Kontaktelemente
- 7: Hubfläche
- 8: Teilvolumen
- 9: Öffnung des Materialreservoirs
- 10: Werkstück
- 11: Füllkörper
- 12: Leitung für Kühlfluid
- 13: Hebevorrichtung
- 14: Fahrwagen
- 15: Vakuumpumpe
- 16: Auftragsvorrichtung
- 17: Verschlusseinrichtung Formenkammer
- 18: Verschlusseinrichtung Prozesskammer
- 19: Materialreservoir

## Patentansprüche

1. Vorrichtung zur additiven Herstellung eines Werkstückes (10) umfassend
einen Satz Strahlungsquellen, der wenigstens eine Strahlungsquelle (2) umfasst,
wenigstens ein Materialreservoir (19) für ein Rohmaterial in Pulverform,
wenigstens eine Formenkammer (3), und
wenigstens eine Prozesskammer (4),
wobei die Formenkammer (3) im Verhältnis zu der Prozesskammer (4) beweglich ist und in einer Aktivposition zumindest teilweise unterhalb der Prozesskammer (4) angeordnet ist,
wobei die Formenkammer (3) an einem oberen Abschnitt eine Verschlusseinrichtung (17) aufweist, die geeignet ist, einen Innenraum der Formenkammer (3) vakuumdicht zu verschließen, und die geöffnet werden kann, so dass die Formenkammer (3) in einem oberen Abschnitt eine Formenkammeröffnung aufweist,
wobei die Prozesskammer (4) an einem unteren Abschnitt eine Verschlusseinrichtung (18) aufweist, die geeignet ist, einen Innenraum der Prozesskammer (4) vakuumdicht zu verschließen, und die geöffnet werden kann, so dass die Prozesskammer (4) in einem unteren Abschnitt eine Prozesskammeröffnung aufweist,
wobei die Formenkammeröffnung und die Prozesskammeröffnung in der Aktivposition so angeordnet sind, dass die beiden Öffnungen zumindest teilweise zur Deckung gebracht werden, so dass ein Schleusenabschnitt erhalten wird,
wobei die Formenkammer (3) eine vertikal bewegbare Hubfläche (7) aufweist, die durch den Schleusenabschnitt in die Prozesskammer (4) und in den Einflussbereich der Strahlungsquelle (2) anhebbar ist,
wobei die Formenkammer (3) von der Aktivposition in eine Passivposition bewegbar ist, so dass eine zweite Formenkammer (3) die Aktivposition einnehmen kann, und
wobei der Satz Strahlungsquellen in einem oberen Abschnitt der Prozesskammer (4) angeordnet ist, **dadurch gekennzeichnet, dass**
die Formenkammer (3) und die Prozesskammer (4) Kontaktelemente (6) aufweisen, die so ausgestaltet sind, dass die Kontaktelemente (6) der beiden Kammern (3, 4) in der Aktivposition wenigstens einen vakuumdichten Wandabschnitt des Schleusenabschnitts ausbilden,
ein Teilvolumen der Prozesskammer (4), das dem oberen Abschnitt zugeordnet ist und den Mündungsbereich von Strahlungsquellen (2) umfasst, von dem Restvolumen der Prozesskammer (4) abtrennbar ist, und die Prozesskammer (4) an dem oberen Ende des Restvolumens und/oder an dem unteren Ende des abzutrennenden Teilvolumens eine Verschlusseinrichtung aufweist, die eine vakuumdichte Abtrennung des Teilvolumens ermöglicht, und der Satz Strahlungsquellen von der Prozesskammer (4) abnehmbar ist.

2. Vorrichtung nach Anspruch 1, wobei die Strahlungsquelle (2) eine Elektronenstrahlkanone ist.

3. Vorrichtung nach Anspruch 1 oder 2, wobei der Satz Strahlungsquellen wenigstens zwei, wenigstens drei oder wenigstens vier Strahlungsquellen (2) aufweist.

4. Vorrichtung nach einem der vorhergehenden Ansprüche, wobei das Verhältnis des abgetrennten Teilvolumens (8) zum verbleibenden Restvolumen höchstens 1 zu 4 beträgt.

5. Vorrichtung nach einem der vorhergehenden Ansprüche, wobei das Materialreservoir (19) eine optional verschließbare Öffnung (9) zur Prozesskammer (4) aufweist, die dem Restvolumen zugeordnet ist.

6. Vorrichtung nach wenigstens einem der vorhergehenden Ansprüche mit wenigstens einer Vakuumpumpe (15), die der Prozesskammer (4) zugeordnet ist.

7. Vorrichtung nach wenigstens einem der vorhergehenden Ansprüche, wobei die Formenkammer (3) eingerichtet ist, ein darin befindliches Werkstück (10) mit einem Kühlgas zu kühlen.

8. Vorrichtung nach Anspruch 7, wobei die Formenkammer (3) zum Zwecke der Kühlung des Werkstückes (10) mit einem Kühlgas einen Einlass und/oder einen Auslass für das Kühlgas aufweist, und/oder wobei die Formenkammer (3) wenigstens ein Mittel zum Umwälzen einer in der Formenkammer (3) befindlichen Menge Kühlgas aufweist.

9. Vorrichtung nach Anspruch 8, wobei das Mittel zum Umwälzen ein Lüfter oder eine Umwälzpumpe ist.

10. Herstellungssystem für Werkstücke (10), umfassend eine Anzahl von n ≥ 2 Vorrichtungen gemäß einem der vorhergehenden Ansprüche, mit der Maßgabe, dass das Herstellungssystem höchstens n - 1 Sätze Strahlungsquellen aufweist.

11. Verfahren zur additiven Herstellung von Werkstücken (10), mit folgenden Schritten
a. Bereitstellen einer Vorrichtung nach wenigstens einem der vorhergehenden Ansprüche 1 bis 9, oder Bereitstellen eines Herstellungssystems nach Anspruch 10,
b. Bereitstellen einer Formenkammer (3) in einer Aktivposition mit in den Einflussbereich der wenigstens einen Strahlungsquelle (2) in der Prozesskammer (4) angehobenen Hubfläche (7),
c. Vorlegen einer Schicht Rohmaterials auf der Hubfläche (7),
d. Beaufschlagen von der gewünschten Form des Werkstückes (10) entsprechenden Teilbereichen der ersten Materialschicht mit Strahlung aus der Strahlungsquelle (2),
e. Absenken der Hubfläche (7),
f. Vorlegen einer weiteren Schicht Rohmaterials auf der Materialschicht,
g. Beaufschlagen von der gewünschten Form des Werkstückes (10) entsprechenden Teilbereichen der weiteren Materialschicht mit Strahlung aus der Strahlungsquelle (2),
h. Wiederholung der Schritte e. bis g. bis zur Fertigstellung des Werkstückes (10),
i. Absenken der Hubfläche (7) mit darauf befindlichem Werkstück (10) aus der Prozesskammer (4), durch den Schleusenabschnitt in die Formenkammer (3),
j. Verschließen des Innenraums der Formenkammer (3) mit der Verschlusseinrichtung (17),
k. Fortbewegen der Formenkammer (3) aus der Aktivposition in eine Passivposition,
sowie den weiteren Schritten:
- Abnehmen des Satzes Strahlungsquellen von der Vorrichtung,
- Verbringen des Satzes Strahlungsquellen zu einer weiteren Vorrichtung,
- Anbringen des Satzes Strahlungsquellen an der weiteren Vorrichtung.

12. Verfahren nach Anspruch 11, wobei sich dem Schritt k. folgender Schritt anschließt:
I. Bewegen einer weiteren Formenkammer (3) aus einer Passivposition in die Aktivposition und Wiederholung der Schritte b. bis k.

13. Verfahren nach Anspruch 11 oder 12, wobei vor dem Abnehmen des Satzes Strahlungsquellen ein Abtrennen eines dem oberen Abschnitt zugeordneten Teilvolumens (8) der Prozesskammer (4) erfolgt.

14. Verfahren nach einem der Ansprüche 11 bis 13, wobei zumindest während der Schritte d. bis h. in der Prozesskammer (4) und in der Formenkammer (3) ein Druck von höchstens 10⁻³ mbar herrscht.

15. Verfahren nach Anspruch 14, wobei auch während der Schritte c. und j. in der Prozesskammer (4) und in der Formenkammer (3) ein Druck von höchstens 10⁻³ mbar herrscht.

## Claims

1. A device for the additive manufacture of a workpiece (10) comprising
a set of radiation sources which comprises at least one radiation source (2),
at least one material reservoir (19) for a raw material in powder form,
at least one mold chamber (3), and
at least one process chamber (4),
wherein the mold chamber (3) in relation to the process chamber (4) can be moved and in an active position is at least partially arranged below the process chamber (4),
wherein the mold chamber (3) at an upper section comprises a closure means (17) which is suitable to close an interior room of the mold chamber (3) vacuum-tightly, and which can be opened so that the mold chamber (3) in an upper section comprises a mold chamber opening,
wherein the process chamber (4) at a lower section comprises a closure means (18) which is suitable to close an interior room of the process chamber (4) vacuum-tightly, and which can be opened so that the process chamber (4) in a lower section comprises a process chamber opening,
wherein the mold chamber opening and the process chamber opening in the active position are arranged such that both openings are at least partially made to coincide so that a sluice section is obtained,
wherein the mold chamber (3) comprises a vertically movable lifting area (7) which can be lifted through the sluice section into the process chamber (4) and into the zone of influence of the radiation source (2),
wherein the mold chamber (3) can be moved from the active position into a passive position so that a second mold chamber (3) can occupy the active position, and
wherein the set of radiation sources is arranged in an upper section of the process chamber (4), **characterized in that**
the mold chamber (3) and the process chamber (4) comprise contact elements (6) which are designed such that the contact elements (6) of both chambers (3, 4) in the active position form at least one vacuum-tight wall section of the sluice section,
a partial volume of the process chamber (4) which is attributed to the upper section and comprises the mouth area of radiation sources (2) can be separated from the residual volume of the process chamber (4), and the process chamber (4) at the upper end of the residual volume and/or at the lower end of the partial volume to be separated comprises a closure means which allows a vacuum-tight separation of the partial volume, and the set of radiation sources can be detached from the process chamber (4).

2. The device according to claim 1, wherein the radiation source (2) is an electron beam gun.

3. The device according to claim 1 or 2, wherein the set of radiation sources comprises at least two, at least three or at least four radiation sources (2).

4. The device according to one of the preceding claims, wherein the ratio of the separated partial volume (8) to the remaining residual volume is at most 1 to 4.

5. The device according to one of the preceding claims, wherein the material reservoir (19) comprises an optionally closable opening (9) towards the process chamber (4) which is attributed to the residual volume.

6. The device according to at least one of the preceding claims with at least one vacuum pump (15) which is attributed to the process chamber (4).

7. The device according to at least one of the preceding claims, wherein the mold chamber (3) is equipped such that a workpiece being present therein (10) can be cooled with a cooling gas.

8. The device according to claim 7, wherein the mold chamber (3) for the purpose of cooling the workpiece (10) with a cooling gas comprises an inlet and/or an outlet for the cooling gas, and/or wherein the mold chamber (3) comprises at least one means for circulating an amount of cooling gas being present in the mold chamber (3).

9. The device according to claim 8, wherein the means for circulating is a fan or a circulating pump.

10. A manufacturing system for workpieces (10), comprising a number of n ≥ 2 devices according to one of the preceding claims with the proviso that the manufacturing system comprises at most n - 1 sets of radiation sources.

11. A method for the additive manufacture of workpieces (10), with the following steps
a. providing of a device according to at least one of the preceding claims 1 to 9, or providing of a manufacturing system according to claim 10,
b. providing of a mold chamber (3) in an active position with lifting area (7) being lifted into the zone of influence of the at least one radiation source (2) in the process chamber (4),
c. placing of a layer of raw material on the lifting area (7),
d. applying of radiation of the radiation source (2) to partial regions of the first material layer which correspond to the desired form of the workpiece (10),
e. lowering of the lifting area (7),
f. placing of a further layer of raw material on the material layer,
g. applying of radiation of the radiation source (2) to partial regions of the further material layer which correspond to the desired form of the workpiece (10),
h. repeating of the steps e. to g. until the workpiece (10) is completed,
i. lowering of the lifting area (7) with the workpiece (10) being present thereon out of the process chamber (4), through the sluice section into the mold chamber (3),
j. closing of the interior room of the mold chamber (3) with the closure means (17),
k. moving away of the mold chamber (3) from the active position into a passive position,
as well as the further steps:
- detaching of the set of radiation sources from the device,
- transporting of the set of radiation sources to a further device,
- installing of the set of radiation sources on said further device.

12. The method according to claim 11, wherein subsequently to step k. the following step is conducted:
1. moving of a further mold chamber (3) from a passive position into the active position and repeating of the steps b. to k.

13. The method according to claim 11 or 12, wherein prior to the detachment of the set of radiation sources a separation of a partial volume (8) of the process chamber (4) which is attributed to the upper section is realized.

14. The method according to one of claims 11 to 13, wherein at least during the steps d. to h. in the process chamber (4) and in the mold chamber (3) a pressure of at most 10⁻³ mbar prevails.

15. The method according to claim 14, wherein also during the steps c. and j. in the process chamber (4) and in the mold chamber (3) a pressure of at most 10⁻³ mbar prevails.

## Revendications

1. Dispositif de fabrication additive d'une pièce (10) comprenant
un ensemble de sources de rayonnement qui comprend au moins une source de rayonnement (2),
au moins un réservoir de matière (19) pour une matière première sous forme de poudre,
au moins une chambre de moulage (3), et
au moins une chambre de traitement (4),
dans lequel la chambre de moulage (3) est mobile par rapport à la chambre de traitement (4) et est disposée dans une position active au moins partiellement sous la chambre de traitement (4),
dans lequel la chambre de moulage (3) présente, au niveau d'une section supérieure, un dispositif de fermeture (17) qui est adapté pour fermer un espace intérieur de la chambre de moulage (3) de manière étanche au vide et qui peut être ouvert de sorte que la chambre de moulage (3) présente une ouverture de chambre de moulage au niveau d'une section supérieure,
dans lequel la chambre de traitement (4) présente, au niveau d'une section inférieure, un dispositif de fermeture (18) qui est adapté pour fermer un espace intérieur de la chambre de traitement (4) de manière étanche au vide et qui peut être ouvert de sorte que la chambre de traitement (4) présente une ouverture de chambre de traitement au niveau d'une section inférieure,
dans lequel l'ouverture de chambre de moulage et l'ouverture de chambre de traitement sont disposées dans la position active de sorte que les deux ouvertures sont au moins partiellement alignées, de sorte qu'une section de sas est obtenue,
dans lequel la chambre de moulage (3) présente une surface de levage (7) mobile verticalement, qui peut être soulevée par la section de sas dans la chambre de traitement (4) et dans la zone d'influence de la source de rayonnement (2),
dans lequel la chambre de moulage (3) peut être déplacée de la position active à une position passive, de sorte qu'une seconde chambre de moulage (3) peut occuper la position active, et
dans lequel l'ensemble de sources de rayonnement est disposé dans une section supérieure de la chambre de traitement (4), **caractérisé en ce que**
la chambre de moulage (3) et la chambre de traitement (4) présentent des éléments de contact (6) qui sont conçus de sorte que les éléments de contact (6) des deux chambres (3, 4) forment au moins une section de paroi étanche au vide de la section de sas dans la position active,
un volume partiel de la chambre de traitement (4), qui est associé à la section supérieure et comprend la zone d'embouchure de sources de rayonnement (2), peut être séparé du volume résiduel de la chambre de traitement (4), et la chambre de traitement (4) présente, à l'extrémité supérieure du volume résiduel et/ou à l'extrémité inférieure du volume partiel à séparer, un dispositif de fermeture qui permet une séparation étanche au vide du volume partiel, et l'ensemble de sources de rayonnement peut être retiré de la chambre de traitement (4).

2. Dispositif selon la revendication 1, dans lequel la source de rayonnement (2) est un canon à électrons.

3. Dispositif selon la revendication 1 ou 2, dans lequel l'ensemble de sources de rayonnement présente au moins deux, au moins trois ou au moins quatre sources de rayonnement (2).

4. Dispositif selon l'une quelconque des revendications précédentes, dans lequel le rapport entre le volume partiel séparé (8) et le volume résiduel est au plus de 1 à 4.

5. Dispositif selon l'une quelconque des revendications précédentes, dans lequel le réservoir de matière (19) présente une ouverture (9) pouvant être facultativement fermée vers la chambre de traitement (4), qui est associée au volume résiduel.

6. Dispositif selon au moins l'une quelconque des revendications précédentes, avec au moins une pompe à vide (15) associée à la chambre de traitement (4).

7. Dispositif selon au moins l'une quelconque des revendications précédentes, dans lequel la chambre de moulage (3) est configurée pour refroidir une pièce (10) qui s'y trouve avec un gaz de refroidissement.

8. Dispositif selon la revendication 7, dans lequel la chambre de moulage (3) présente une entrée et/ou une sortie pour le gaz de refroidissement dans le but de refroidir la pièce (10) avec un gaz de refroidissement, et/ou dans lequel la chambre de moulage (3) présente au moins un moyen de circulation d'une quantité de gaz de refroidissement se trouvant dans la chambre de moulage (3).

9. Dispositif selon la revendication 8, dans lequel le moyen de circulation est un ventilateur ou une pompe de circulation.

10. Système de fabrication de pièces (10) comprenant un certain nombre d n ≥ 2 dispositifs selon l'une quelconque des revendications précédentes, à condition que le système de fabrication présente au plus n -1 ensembles de sources de rayonnement.

11. Procédé de fabrication additive de pièces (10), avec les étapes suivantes
a. fourniture d'un dispositif selon au moins l'une quelconque des revendications précédentes 1 à 9, ou fourniture d'un système de fabrication selon la revendication 10,
b. fourniture d'une chambre de moulage (3) dans une position active avec une surface de levage (7) soulevée dans la zone d'influence de l'au moins une source de rayonnement (2) dans la chambre de traitement (4),
c. présentation d'une couche de matière première sur la surface de levage (7),
d. sollicitation des zones partielles de la première couche de matière correspondant à la forme souhaitée de la pièce (10) à un rayonnement provenant de la source de rayonnement (2),
e. abaissement de la surface de levage (7),
f. présentation d'une couche de matière première supplémentaire sur la couche de matière,
g. sollicitation des zones partielles de la couche de matière supplémentaire correspondant à la forme souhaitée de la pièce (10) à un rayonnement provenant de la source de rayonnement (2),
h. répétition des étapes e. à g. jusqu'à la finition de la pièce (10),
i. abaissement de la surface de levage (7), avec la pièce (10) se trouvant dessus, de la chambre de traitement (4), à travers la section de sas, dans la chambre de moulage (3),
j. fermeture de l'espace intérieur de la chambre de moulage (3) avec le dispositif de fermeture (17),
k. déplacement de la chambre de moulage (3) de la position active à une position passive,
ainsi que les étapes supplémentaires suivantes :
- retrait de l'ensemble de sources de rayonnement du dispositif,
- déplacement de l'ensemble de sources de rayonnement vers un dispositif supplémentaire,
- application de l'ensemble de sources de rayonnement au dispositif supplémentaire.

12. Procédé selon la revendication 11, dans lequel l'étape k. est suivie de l'étape suivante :
l. déplacement d'une chambre de moulage supplémentaire (3) d'une position passive à la position active et répétition des étapes b. à k.

13. Procédé selon la revendication 11 ou 12, dans lequel une séparation d'un volume partiel (8) de la chambre de traitement (4) associé à la section supérieure est effectuée avant le retrait de l'ensemble de sources de rayonnement.

14. Procédé selon l'une quelconque des revendications 11 à 13, dans lequel, au moins pendant les étapes d. à h., une pression d'au plus 10⁻³ mbar règne dans la chambre de traitement (4) et dans la chambre de moulage (3).

15. Procédé selon la revendication 14, dans lequel une pression d'au plus 10⁻³ mbar règne également pendant les étapes c. et j. dans la chambre de traitement (4) et dans la chambre de moulage (3).
